# FASCICULE DE BREVET EUROPEEN

(11) **EP 2 658 912 B1**
(45) Date de publication et mention de la délivrance du brevet: **21.08.2019**
(21) Numéro de dépôt: 11815544.9
(22) Date de dépôt: 26.12.2011
(51) Int. Cl.: C08K 5/1525, C08K 5/1539, C09K 21/06, D04H 1/4209, D04H 1/587

(54) **COMPOSITION IGNIFUGE AQUEUSE POUR MAT A BASE DE FIBRES MINERALES, ET MATS OBTENUS**
WÄSSRIGE FLAMMHEMMENDE ZUSAMMENSETZUNG FÜR MINERALFASERMATTEN UND RESULTIERENDE MATTEN
AQUEOUS FIRE RETARDANT COMPOSITION FOR MINERAL FIBER MAT, AND RESULTING MATS

(30) Priorité: 31.12.2010 FR 1005202
(43) Date de publication de la demande: 06.11.2013
(73) Titulaire: Saint-Gobain Adfors, 73000 Chambéry (FR)
(72) Inventeur: CHUDA, Katarzyna, 92600 Asnieres sur Seine (FR)
(74) Mandataire: Saint-Gobain Recherche
(86) Numéro de dépôt international: PCT/FR2011/053195
(87) Numéro de publication internationale: WO 2012/089981

(56) Documents cités:
- WO-A1-96/31650
- WO-A2-02/04133
- FR-A1- 2 940 648
- US-A1- 2007 010 386
- US-B2- 7 608 550
- DATABASE WPI Week 200701 Thomson Scientific, London, GB; AN 2007-003749 XP002658005, -& JP 2006 299012 A (DAICEL CHEM IND LTD) 2 novembre 2006 (2006-11-02)

## Description

La présente invention se rapporte au domaine des mats à base de fibres minérales dotés de propriétés retardatrices de flammes.

Elle concerne plus particulièrement une composition ignifuge aqueuse qui contient une résine thermoplastique ou thermodurcissable et des agents retardateurs de flamme organiques, et les mats ainsi obtenus.

Les mats à base de fibres minérales non tissées (aussi appelés « intissés », « non tissés » ou « voiles ») sont bien connus et utilisés dans de nombreuses applications, notamment en tant que revêtement de surface de matériaux divers, en particulier de produits d'isolation thermique et/ou acoustique à base de laine minérale.

De tels mats peuvent être fabriqués selon les procédés conventionnels opérant par voie sèche ou par voie humide.

Dans le procédé par voie sèche, de la matière minérale fondue contenue dans un four est acheminée vers un ensemble de filières à partir desquelles des filaments s'écoulent par gravité et sont étirés par un fluide gazeux. Les filaments minéraux sont récoltés sur un convoyeur où ils s'entremêlent en formant un mat.

Sur la face supérieure du mat ainsi formé, on applique une composition de liant à l'aide d'un dispositif adapté, le plus souvent opérant par dépôt par rideau, et on élimine l'excès de liant par aspiration au niveau de la face opposée. Le mat entre ensuite dans un dispositif contenant de l'air chaud dont la température (de l'ordre de 180 à 260°C) et la durée (au plus égale à 5 minutes) permettent l'élimination de l'eau et la réticulation du liant, puis le mat de fibres minérales est collecté sous la forme d'un enroulement.

Dans le procédé par voie humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions que celles décrites pour le procédé par voie sèche.

Dans les procédés précités, la composition de liant a pour fonction de lier les fibres minérales entre-elles et de conférer au mat qui les contient des propriétés mécaniques adaptées à l'usage désiré, notamment une rigidité suffisante pour pouvoir être manipulé facilement sans risque notamment qu'il puisse être déchiré.

La composition de liant à appliquer sur les fibres minérales se présente généralement sous la forme d'une émulsion ou d'une dispersion aqueuse renfermant au moins une résine thermoplastique et/ou thermodurcissable et des additifs tels qu'un catalyseur de réticulation de la résine, un silane promoteur d'adhérence, un hydrofugeant, ...

Les résines thermoplastiques les plus couramment utilisées sont des résines à base de polyacétate de vinyle, styrène-butadiène (SBR) et de polymères acryliques. Les résines thermodurcissables sont quant à elles des résines à base de formaldéhyde, notamment des résines phénoliques appartenant à la famille des résols, des résines urée-formaldéhyde et des résines mélamine-formaldéhyde.

Un inconvénient de ces résines réside dans leur aptitude à se consumer facilement en cas de feu lorsque les mats à base de fibres minérales sont exposés directement aux flammes.

Un moyen bien connu pour améliorer la résistance au feu des mats précités consiste à y inclure des agents ignifuges tels que des composés halogénés, notamment à base de brome ou de chlore, ou des composés phosphorés. Il est également connu d'utiliser les hydroxydes métalliques qui ont l'avantage d'être moins coûteux que les agents ignifuges précédents.

Ainsi, dans US 2005/0208852, il est décrit un mat fibreux pour membrane bitumée de toiture dont les fibres sont liées par une composition ignifuge qui contient un liant polymérique et un hydroxyde d'aluminium.

Dans EP 2 053 083 A1, il est proposé une composition ignifuge pour mat fibreux qui contient au moins un liant organique et au moins une charge, de préférence choisie dans le groupe de composés suivants : carbonate de calcium, mica, argile, trihydroxyde d'aluminium et talc.

Dans US 7 608 550, il est décrit un mat fibreux destiné au revêtement de panneaux de conduit de ventilation ou de panneaux isolants acoustiques et/ou thermiques à base de laine minérale. Le mat fibreux est à base de fibres de verre liées par une composition contenant un liant organique et en tant qu'agents ignifuges, un hydroxyde métallique et du noir de carbone. L'hydroxyde métallique préféré est l'hydroxyde de magnésium ou le trihydroxyde d'aluminium.

La présente invention vise à proposer une composition ignifuge aqueuse qui confère des propriétés de résistance au feu améliorées aux mats à base de fibres de verre sur lesquels elle est appliquée.

La composition ignifuge aqueuse selon la présente invention est caractérisée en ce qu'elle comprend :
- au moins une résine thermoplastique ou thermodurcissable choisie parmi les résines acryliques, les résines urée-formaldéhyde et les mélanges de ces résines, et
- au moins un agent retardateur de flamme organique choisi parmi
   a) les dimères d'alkyl cétène (AKD) de formule (I) suivante 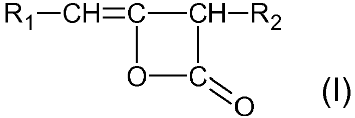 dans laquelle R₁ et R₂, identiques ou différents, représentent un radical alkyle en C₄-C₁₈, de préférence en C₁₂-C₁₆
      et
   b) les alkényl d'anhydride succinique (ASA) de formule (II) suivante 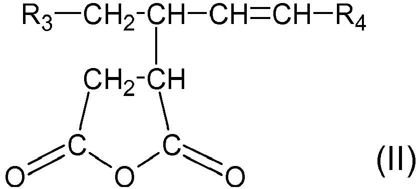 dans laquelle R₃ et R₄, identiques ou différents, représentent un radical alkyle, le nombre total d'atomes de carbone dans ces radicaux variant de 10 à 18, de préférence de 12 à 14, le retardateur de flamme organique représentant 0,1 à 10 % du poids de la résine.

La quantité de résine représente 20 à 99,9 % du poids sec de la composition ignifuge aqueuse et de préférence 50 à 90 %.

Dans la composition ignifuge aqueuse, l'agent retardateur de flamme organique représente 0,1 à 10 % du poids de la résine, et de préférence 1 à 8 %.

Selon un mode de réalisation préféré, la composition ignifuge aqueuse comprend en outre au moins un agent permettant de colorer le mat de fibres minérales, en particulier du noir de carbone.

La quantité de noir de carbone représente 10 à 50 % du poids de la résine et de préférence 15 à 40 %.

La composition ignifuge aqueuse conforme à l'invention peut comprendre en outre au moins une charge minérale telle que du carbonate de calcium, une argile, du talc ou du mica. On préfère le carbonate de calcium parce qu'il contribue à améliorer les propriétés de résistance au feu.

La quantité de charges dans la composition ignifuge aqueuse peut représenter jusqu'à 40 % du poids de la résine et de préférence jusqu'à 30 %.

La composition ignifuge aqueuse conforme à l'invention peut encore comprendre les additifs conventionnels suivants : des pigments organiques et/ou inorganiques, des tensio-actifs, des agents modifiant la rhéologie (notamment des épaississants), des agents anti-mousse, des biocides, des stabilisants, en particulier des agents retardant l'oxydation thermique, et des agents hydrofugeants.

La quantité totale des additifs précités n'excède pas 5 % du poids de la résine, de préférence 2 %.

La composition ignifuge aqueuse selon l'invention présente une teneur en matières solides (extrait sec) qui varie de 10 à 70 % et de préférence de 10 à 50 %.

La composition ignifuge aqueuse conforme à la présente invention est destinée à être appliquée sur des mats de fibres non tissées comprenant des fibres minérales, lesquels mats constituent un autre objet de la présente invention.

Selon un premier mode de réalisation, préféré, on dépose la composition ignifuge aqueuse sur le mat à base de fibres minérales (formé par la voie sèche ou la voie humide), puis le mat est traité à une température permettant la réticulation de la résine thermodurcissable qui devient alors infusible. La réticulation est effectuée à une température qui varie généralement de 150 à 260°C, de préférence de 180 à 220°C, et pendant une durée au plus égale à 3 minutes, de préférence qui varie de 10 secondes à 1 minute, et avantageusement de 15 à 30 secondes. Le mat est ensuite collecté sous la forme d'un enroulement.

Selon un deuxième mode de réalisation, on dépose la composition ignifuge aqueuse sur le mat à base de fibres minérales liées par la composition de liant, dans une étape supplémentaire après la collecte du mat.

L'application de la composition ignifuge aqueuse se fait sur le mat déroulé dans les mêmes conditions d'application que la composition du liant décrites dans le premier mode de réalisation. L'excès de composition ignifuge aqueuse est éliminé par aspiration, le mat est ensuite soumis à un traitement thermique dans des conditions identiques à celles exposées précédemment pour le premier mode de réalisation, puis il est collecté à nouveau sous la forme d'un enroulement.

Les fibres minérales sont des fibres de verre, par exemple de verre E, C, R ou AR (alcali-résistant), ou de roche, notamment de basalte ou de wollastonite (CaSiO₃), de préférence des fibres de verre. On préfère les fibres de verre, avantageusement de verre E.

Les fibres minérales se présentent généralement sous la forme de filaments.

Le mat de fibres minérales est composé de filaments minéraux discontinus de longueur pouvant atteindre 150 mm, de préférence variant de 20 et 100 mm et avantageusement de 50 à 70 mm, et ayant un diamètre qui peut varier dans une large mesure, par exemple de 5 à 30 µm.

S'agissant de fibres de verre, celles-ci peuvent également se présenter sous la forme de fils composés d'une multitude de filaments qui sont liés ensemble par un ensimage (ou fils de base), ou sous la forme d'assemblages de tels fils en stratifils (« rovings » en anglais).

Les fils précités peuvent être des fils sans torsion ou des fils retordus (ou fils textiles), de préférence sans torsion.

Les fils de verre sont généralement coupés à une longueur pouvant aller jusqu'à 100 mm, de préférence variant de 6 à 30 mm, avantageusement de 8 à 20 mm et mieux encore de 10 à 18 mm. Le diamètre des filaments de verre constituant les fils peut varier dans une large mesure, par exemple 5 à 30 µm. De la même manière, de larges variations peuvent survenir dans la masse linéique du fil qui peut aller de 34 à 1500 tex.

Le mat de fibres minérales peut comprendre des fibres organiques synthétiques ou naturelles, de préférence synthétiques.

A titre d'exemples de fibres synthétiques, on peut citer les fibres à base d'une oléfine telle que le polyéthylène et le polypropylène, d'un polyester tel que le polytéréphtalate d'alkylène, notamment le polytéréphtalate d'éthylène, ou d'un polyamide (nylon). Les fibres en polyéthylène sont préférées.

A titre d'exemples de fibres naturelles, on peut citer les fibres végétales, notamment de coton, de noix de coco, de sisal, de chanvre ou de lin, et les fibres animales, notamment la soie ou la laine.

Le mat peut, le cas échéant, être renforcé par des fibres continues qui sont généralement déposées sur le dispositif de convoyage du mat dans le sens d'avancement du mat et réparties sur tout ou partie de la largeur du mat. Ces fibres sont généralement déposées dans l'épaisseur du mat de fibres, notamment minérales, avant l'application de la composition de liant.

Les fibres de renforcement peuvent être des fibres minérales et/ou organiques de même nature chimique que les fibres précitées constituant le mat de fibres selon l'invention.

Les fibres de renforcement en verre sont préférées.

En règle générale, les fibres qui entrent dans la constitution du mat conforme à l'invention sont constituées à plus de 50 % en poids de fibres minérales, de préférence à plus de 75 % et avantageusement à 100 %. De manière particulièrement préférée, les fibres sont en verre.

Le mat à base de fibres minérales, présente généralement une masse surfacique qui varie de 10 à 1100 g/m², de préférence 30 à 350 g/m², avantageusement 35 à 75 g/m².

La composition ignifuge aqueuse représente généralement 7 à 30 % du poids du mat de fibres minérales, de préférence 10 à 25 %, calculé sur la base des matières solides.

Le mat de fibres minérales ignifugé conforme à la présente invention peut être utilisé dans de nombreuses applications, par exemple en tant que revêtement, à peindre ou non, à appliquer sur les murs et/ou les plafonds, revêtement de surface ou de jointement de panneaux de plâtre ou de ciment, revêtement de surface de produits d'isolation thermique et/ou phonique tels qu'une laine minérale ou une mousse destinée plus particulièrement à l'isolation des toitures, membrane d'étanchéité de revêtement de toiture, notamment de bardeaux ou pour la réalisation de revêtement de sol, notamment une sous-couche acoustique.

De préférence, le mat ignifugé est destiné à être utilisé en tant que revêtement de surface de produits d'isolation à base de laine minérale.

Les exemples qui suivent permettent d'illustrer l'invention sans toutefois la limiter.

Dans ces exemples, on soumet le mat de fibres à un test d'exposition à la flamme selon la norme SI 755 (classe II) [équivalente à la norme ISO 11925-2 (classe B)]. On mesure la distance de propagation de la flamme, exprimée en mm, et on détermine l'aspect de la flamme et la présence d'une inflammation de la zone exposée à la flamme (bords ou surface selon le cas). La norme impose que la distance de propagation de la flamme soit être inférieure à 150 mm.

### EXEMPLES 1 A 4

On prépare des compositions ignifuges aqueuses contenant les constituants figurant dans le tableau 1 dans des proportions exprimées en % de poids sec.

Les différents constituants sont introduits dans un récipient contenant de l'eau à la température ambiante, sous agitation modérée jusqu'à l'obtention d'une dispersion uniforme.

La teneur en matières solides (extrait sec) des compositions ignifuges aqueuses est égale à 13 %.

On fabrique un mat de fibres de verre E par le procédé opérant par voie humide selon le premier mode de réalisation de l'invention, dans lequel la composition ignifuge aqueuse est appliquée par dépôt sur le mat de fibres non liées. L'excès de liant est aspiré et le mat est placé dans une étuve à 210°C pendant 1 minute.

Le mat obtenu possède une masse surfacique égale à 60 g/m² et contient 20 % en poids de liant infusible.

Les résultats du test d'exposition à la flamme sont consignés dans le tableau 1.

Les mats de fibres des exemples 1 et 3 selon l'invention présentent une distance de propagation de flamme plus faible que celle des exemples comparatifs 2 et 4 qui ne contiennent pas d'agent retardateur de flamme.

**Tableau 1**

| | Ex. 1 | Ex. 2 (comp.) | Ex. 3 | Ex. 4 (comp.) |
|---|---|---|---|---|
| **Composition ignifuge** | | | | |
| - résine urée-formaldéhyde⁽¹⁾ | 70,8 | 72,8 | - | - |
| - résine acrylique⁽²⁾ | - | - | 70,8 | 72.8 |
| - agent retardateur de flamme | | | | |
| • AKD de formule (I)⁽³⁾ | 2 | - | - | - |
| • ASA de formule (II)⁽⁴⁾ | - | - | 2 | - |
| **-** noir de carbone | 27,2 | 27,2 | 27,2 | 27,2 |

| **Propriétés** | | | | |
|---|---|---|---|---|
| - dist. propagation flamme (mm) | <150 | >150 | <150 | >150 |
| - aspect de la flamme | fugace | fugace | fugace | fugace |
| - inflammation des bords | non | oui | non | oui |
| - inflammation de la surface | oui | oui | oui | oui |

| | | | | |
|---|---|---|---|---|
| ⁽¹⁾ Commercialisée sous la référence Prefere® par la société DYNEA ou sous la référence Sadecol® par la société SADEPAN ⁽²⁾ Commercialisée sous la référence Acrodur® par la société BASF ⁽³⁾ Commercialisé sous la référence Aquapel® J215 par la société HERCULES ⁽⁴⁾ Commercialisé sous la référence Prequel® 725 B par la société HERCULES | | | | |

## Revendications

1. Composition ignifuge aqueuse pour fibres minérales, notamment de verre ou de roche, **caractérisée en ce qu'**elle comprend :
- au moins une résine thermoplastique ou thermodurcissable choisie parmi les résines acryliques, les résines urée-formaldéhyde et les mélanges de ces résines, et
- au moins un agent retardateur de flamme organique choisi parmi
a) les dimères d'alkyl cétène (AKD) de formule (I) suivante 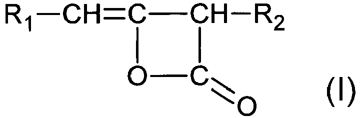 dans laquelle R₁ et R₂, identiques ou différents, représentent un radical alkyle en C₄-C₁₈, de préférence en C₁₂-C₁₆
et
b) les alkényl d'anhydride succinique (ASA) de formule (II) suivante 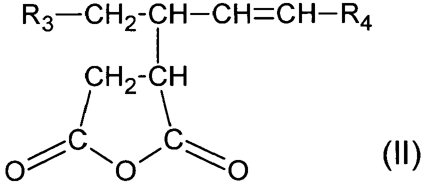 dans laquelle R₃ et R₄, identiques ou différents, représentent un radical alkyle, le nombre total d'atomes de carbone dans ces radicaux variant de 10 à 18, de préférence de 12 à 14,
le retardateur de flamme organique représentant 0,1 à 10 % du poids de la résine.

2. Composition selon la revendication 1, **caractérisée en ce que** la quantité de résine représente 20 à 99,9 % du poids sec de la composition ignifuge aqueuse, de préférence 50 à 90 %.

3. Composition selon la revendication 1 ou 2, **caractérisée en ce que** le retardateur de flamme organique représente 1 à 8 % du poids de la résine.

4. Composition selon l'une des revendications 1 à 3, **caractérisée en ce qu'**elle comprend en outre au moins un agent permettant de colorer le mat de fibres minérales, en particulier du noir de carbone.

5. Composition selon la revendication 4, **caractérisée en ce que** le noir de carbone représente 10 à 50 % du poids total de la résine et de préférence 15 à 40 %.

6. Composition selon l'une des revendications 1 à 5, **caractérisée en ce qu'**elle comprend en outre au moins une charge minérale telle que du carbonate de calcium, une argile, du talc ou du mica, de préférence le carbonate de calcium.

7. Composition selon la revendication 6, **caractérisée en ce que** la quantité de charges représente jusqu'à 40 % du poids de la résine et de préférence jusqu'à 30 %.

8. Mat de fibres minérales non tissées, **caractérisé en ce que** les fibres minérales sont traitées par une composition ignifuge aqueuse selon l'une des revendications 1 à 7.

9. Mat selon la revendication 8, **caractérisé en ce que** les fibres sont des fibres de verre ou de roche, notamment de basalte ou de wollastonite.

10. Mat selon la revendication 8 ou 9, **caractérisé en ce que** les fibres minérales sont sous la forme de filaments, de fils composés d'une multitude de filaments (fils de base) ou d'assemblages de ces fils de base en stratifils.

11. Mat selon l'une des revendications 8 à 10, **caractérisé en ce qu'**il comprend en outre des fibres organiques synthétiques ou naturelles, de préférence des fibres de polyéthylène.

12. Mat selon l'une des revendications 8 à 11, **caractérisé en ce qu'**il présente une masse surfacique qui varie de 10 à 1100 g/m², de préférence 30 à 350 g/m², avantageusement 35 à 75 g/m².

13. Mat selon l'une des revendications 8 à 12, **caractérisé en ce que** la composition ignifuge aqueuse représente 7 à 30 % en poids du mat de fibres, notamment minérales, de préférence 10 à 25 %, calculé sur la base des matières solides.

14. Mat selon l'une des revendications 8 à 13, **caractérisé en ce que** les fibres sont en verre.

## Patentansprüche

1. Wässrige flammhemmende Zusammensetzung für Mineralfasern, insbesondere Glas- oder Steinfasern, **dadurch gekennzeichnet, dass** sie umfasst:
- mindestens ein thermoplastisches oder duroplastisches Harz, ausgewählt aus den Acrylharzen, den Harnstoff-Formaldehyd-Harzen und den Gemischen dieser Harze, und
- mindestens ein organisches Flammschutzmittel, ausgewählt aus
a) den Alkylketendimeren (AKD) der folgenden Formel (I) 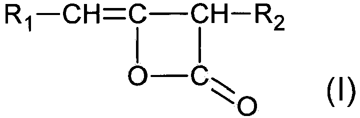 wobei R₁ und R₂, die gleich oder verschieden sind, einen C₄-C₁₈-, vorzugsweise C₁₂-C₁₆-Alkylrest darstellen,
und
b) den Alkenylbernsteinsäureanhydriden (ASA) der folgenden Formel (II) 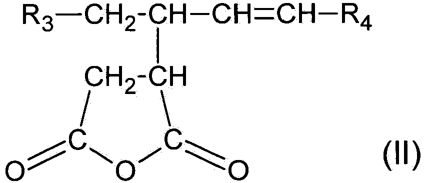 wobei R₃ und R₄, die gleich oder verschieden sind, einen Alkylrest darstellen,
wobei die Gesamtanzahl der Kohlenstoffatome in diesen Radikalen von 10 bis 18, vorzugsweise von 12 bis 14, schwankt,
wobei das organische Flammschutzmittel 0,1 bis 10 % des Gewichts des Harzes darstellt.

2. Zusammensetzung nach Anspruch 1, **dadurch gekennzeichnet, dass** die Harzmenge 20 bis 99,9 % des Trockengewichts der wässrigen flammhemmenden Zusammensetzung, vorzugsweise 50 bis 90 %, darstellt.

3. Zusammensetzung nach Anspruch 1 oder 2, **dadurch gekennzeichnet, dass** das organische Flammschutzmittel 1 bis 8 % des Gewichts des Harzes darstellt.

4. Zusammensetzung nach einem der Ansprüche 1 bis 3, **dadurch gekennzeichnet, dass** sie weiterhin mindestens ein Mittel zum Färben der Mineralfasermatte, insbesondere Carbonschwarz, umfasst.

5. Zusammensetzung nach Anspruch 4, **dadurch gekennzeichnet, dass** das Carbonschwarz 10 bis 50 % des Gesamtgewichts des Harzes und vorzugsweise 15 bis 40 % darstellt.

6. Zusammensetzung nach einem der Ansprüche 1 bis 5, **dadurch gekennzeichnet, dass** sie weiterhin mindestens einen mineralischen Füllstoff wie Calciumcarbonat, einen Ton, Talk oder Glimmer, vorzugsweise das Calciumcarbonat, umfasst.

7. Zusammensetzung nach Anspruch 6, **dadurch gekennzeichnet, dass** die Menge an Füllstoffen bis zu 40 % des Gewichts des Harzes und vorzugsweise bis zu 30 % darstellt.

8. Matte aus Mineralfaservlies, **dadurch gekennzeichnet, dass** die Mineralfasern mit einer wässrigen flammhemmenden Zusammensetzung nach einem der Ansprüche 1 bis 7 behandelt sind.

9. Matte nach Anspruch 8, **dadurch gekennzeichnet, dass** die Fasern Glas- oder Steinfasern, insbesondere Basalt- oder Wollastonitfasern, sind.

10. Matte nach Anspruch 8 oder 9, **dadurch gekennzeichnet, dass** die Mineralfasern in Form von Filamenten, von Fäden, die aus einer Vielzahl von Filamenten zusammengesetzt sind (Basisfäden) oder von Bündelungen dieser Basisfäden zu Rovings vorliegen.

11. Matte nach einem der Ansprüche 8 bis 10, **dadurch gekennzeichnet, dass** sie weiterhin synthetische oder natürliche organische Fasern, vorzugsweise Polyethylenfasern, umfasst.

12. Matte nach einem der Ansprüche 8 bis 11, **dadurch gekennzeichnet, dass** sie eine flächenbezogene Masse aufweist, die von 10 bis 1100 g/m², vorzugsweise 30 bis 350 g/m² und in vorteilhafter Weise 35 bis 75 g/m² schwankt.

13. Matte nach einem der Ansprüche 8 bis 12, **dadurch gekennzeichnet, dass** die wässrige flammhemmende Zusammensetzung 7 bis 30 Gew.-% der Faser-, insbesondere Mineralfasermatte, vorzugsweise 10 bis 25 %, berechnet auf der Basis der Feststoffe, darstellt.

14. Matte nach einem der Ansprüche 8 bis 13, **dadurch gekennzeichnet, dass** die Fasern aus Glas sind.

## Claims

1. An aqueous flame retardant composition for mineral fibers, in particular glass or rock fibers, **characterized in that** it comprises:
- at least one thermoplastic or thermoset resin chosen from acrylic resins, urea-formaldehyde resins or a mixture of said resins, and
- at least one organic flame retarding agent chosen from:
a) alkyl ketene dimers (AKDs) of formula (I) below: 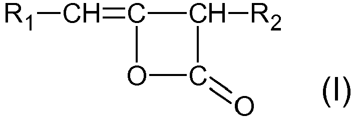 in which R₁ and R₂, which may be identical or different, represent a C₄-C₁₈, preferably C₁₂-C₁₆, alkyl radical;
and
b) alkenyl succinic anhydrides (ASAs) of formula (II) below: 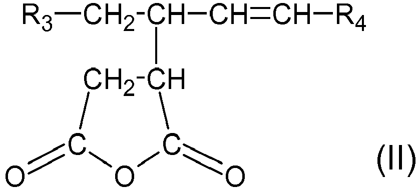 in which R₃ and R₄, which may be identical or different, represent an alkyl radical, the total number of carbon atoms in these radicals varying from 10 to 18, preferably from 12 to 14,
the organic flame retarder representing 0.1% to 10% of the weight of the resin.

2. The composition as claimed in claim 1, **characterized in that** the quantity of resin represents 20% to 99.9% of the dry weight of the aqueous flame retardant composition, preferably 50% to 90%.

3. The composition as claimed in claim 1 or claim 2, **characterized in that** the organic flame retarder represents 1% to 8% of the weight of the resin.

4. The composition as claimed in one of claims 1 to 3, **characterized in that** it further comprises at least one agent for coloring the mat of mineral fibers, in particular carbon black.

5. The composition as claimed in claim 4, **characterized in that** the carbon black represents 10% to 50% of the total weight of the resin and preferably 15% to 40%.

6. The composition as claimed in one of claims 1 to 5, **characterized in that** it further comprises at least one mineral filler such as calcium carbonate, a clay, talc or mica, preferably calcium carbonate.

7. The composition as claimed in claim 6, **characterized in that** the quantity of fillers represents up to 40% of the weight of the resin and preferably up to 30%.

8. A mat of non-woven mineral fibers, **characterized in that** the mineral fibers are treated with an aqueous flame retardant composition as claimed in one of claims 1 to 7.

9. The mat as claimed in claim 8, **characterized in that** the fibers are fibers of glass or rock, in particular basalt or wollastonite.

10. The mat as claimed in claim 8 or claim 9, **characterized in that** the mineral fibers are in the form of filaments, threads composed of a multitude of filaments (base threads) or assemblies of said base threads into rovings.

11. The mat as claimed in one of claims 8 to 10, **characterized in that** it further comprises synthetic or natural organic fibers, preferably polyethylene fibers.

12. The mat as claimed in one of claims 8 to 11, **characterized in that** it has a mass per unit area in the range 10 to 1100 g/m², preferably in the range 30 to 350 g/m², advantageously in the range 35 to 75 g/m².

13. The mat as claimed in one of claims 8 to 12, **characterized in that** the aqueous flame retardant composition represents 7% to 30% of the weight of the mineral fiber mat, preferably 10% to 25%, calculated on the basis of the solid materials.

14. The mat as claimed in one of claims 8 to 13, **characterized in that** the fibers are formed from glass.
